# EUROPÄISCHE PATENTANMELDUNG

(11) **EP 1 908 932 A2**
(43) Veröffentlichungstag der Anmeldung: **09.04.2008**
(21) Anmeldenummer: 07017808.2
(22) Anmeldetag: 12.09.2007
(51) Int. Cl.: F01N 3/20, F01N 7/04, F01N 3/029, F01N 1/08

(54) **Abgasanlage für Dieselfahrzeuge mit einem SCR-Katalysator**

(30) Priorität: 26.09.2006 DE 102006045435
(71) Anmelder: Faurecia Abgastechnik GmbH, 90765 Fürth (DE); AUDI AKTIENGESELLSCHAFT, 85045 Ingolstadt (DE)
(72) Erfinder: Amon, Bernd, Dr., 96407 Bamberg (DE); Albert, Herbert, 91056 Erlangen (DE); Reif, Peter, 91056 Erlangen (DE); Perrot, Yohann, Dr., 76890 Belleville-en-Caux (FR); Londos, Stéphane, 90170 Etueffont (FR); Peter, Werner, 85139 Wettstetten (DE)
(74) Vertreter: Mörtel & Höfner

(57) **Zusammenfassung**

Die Erfindung betrifft eine Abgasanlage für Dieselfahrzeuge mit einem ersten und einem zweiten, auslassseitig mit einem Motor verbindbaren Parallelstrang (2,3), wobei diese mit ihrem stromabwärts weisenden Enden mit einem SCR-Katalysator (5) verbunden sind, und mit einer Vorrichtung, mit der ein Reduktionsmittel an einer stromaufwärts zum SCR-Katalysator (5) gelegenen Stelle in das Abgas einbringbar ist. Eine Injektionseinrichtung (9) für das Reduktionsmittel ist nur am ersten Parallelstrang vorgesehen, wobei dem SCR-Katalysator (5) eine Mischvorrichtung (10) vorgeschaltet ist, in die die Parallelstränge (2,3) münden, und in der eine Vermischung des mit Reduktionsmittel versetzten Abgasstroms des ersten Parallelstrangs (2) mit dem reduktionsmittelfreien Abgasstrom des zweiten Parallelstrangs (3) erfolgt.

## Beschreibung

Die Erfindung betrifft eine Abgasanlage für Dieselfahrzeuge mit einem SCR-Katalysator gemäß dem Oberbegriff des Anspruchs 1.

Ein SCR-Katalysator dient dazu, im Abgas vorhandene Stickoxide zu Stickstoff zu reduzieren. Dazu wird an einer stromaufwärts gelegenen Stelle der Abgasanlage, wie beispielsweise in DE 38 21 832 C1 offenbart, ein Reduktionsmittel zudosiert. Als Reduktionsmittel wird überwiegend Harnstoff eingesetzt, der in Form einer wässrigen Lösung mit Hilfe einer Injektionseinrichtung dem Abgas Strom zudosiert wird.

Oft sind Abgasanlagen in einem sich an einen Motor anschließenden Bereich zweiflutig ausgestaltet, d.h. sie weisen zwei Parallelstränge auf. Eine solche Ausgestaltung ist etwa im Falle von großvolumigen Motoren mit entsprechend großer Abgasmenge erforderlich. Im Falle einer einflutigen Ausführung der Abgasanlage müssten Abgasbehandlungsseinrichtungen wie Abgaskonverter und Dieselpartikelfilter entsprechend großvolumig ausgebildet sein und könnten aus Platzgründen nicht an der Bodengruppe eines Fahrzeugs untergebracht werden. Deshalb ist der sich vom Motor weg erstreckende Abgasstrang zunächst in zwei Parallelstränge aufgeteilt, wobei Abgasbehandlungseinrichtungen doppelt vorhanden, also in jedem Parallelstrang vorhanden sind. So umfasst etwa jeder Parallelstrang zunächst einen Abgaskonverter, dem ein Dieselpartikelfilter nachgeschaltet ist. Eine Zusammenführung der beiden Parallelstränge zu einem gemeinsamen Strang erfolgt vor dem SCR-Katalysator. In der Regel ist in dem sich vor dem SCR-Katalysator befindlichen Bereich der Bodenbaugruppe eines Fahrzeuges der Getriebe-' block angeordnet, so dass eine Zusammenführung der beiden Parallelstränge erst kurz vor dem SCR-Katalysator erfolgen kann. Eine Injektion von Reduktionsmittel unmittelbar an der Vereinigungsstelle der beiden Parallelstränge hätte zur Folge, dass aufgrund der nur sehr kurzen Wegstrecke, die das Abgas durchströmen muss, bevor es den SCR-Katalysator erreicht, keine ausreichende Durchmischung des Abgases mit dem Reduktionsmittel erzielt werden könnte. Der SCR-Katalysator würde dann teilweise von Abgas durchströmt, das keinen oder einen zu geringen Anteil an Reduktionsmittel aufweist und infolgedessen unbehandelt bliebe.

Davon ausgehend ist es die Aufgabe der Erfindung, eine Abgasanlage vorzuschlagen, mit der mit möglichst geringem gerätetechnischen Aufwand eine Zudosierung eines Reduktionsmittels bei ausreichender Durchmischung mit dem Abgas erreicht werden kann.

Nach Anspruch 1 wird diese Aufgabe dadurch gelöst, dass nur an einem Parallelstrang, der im folgenden mit erster Parallelstrang bezeichnet wird, eine Injektionseinrichtung für das Reduktionsmittel vorgesehen ist, und dass dem SCR-Katalysator eine Mischeinrichtung vorgeschaltet ist, in die beide Parallelstränge münden, und in der eine Vermischung des mit Reduktionsmittel versetzten Abgasstroms des ersten Parallelstrangs mit dem reduktionsmittelfreien Abgasstrom des anderen Parallelstrangs, des zweiten Parallelstrangs, erfolgt. Durch diese Ausgestaltung ist zunächst gewährleistet, dass die Zudosierung des Reduktionsmittels mit ausreichendem Abstand vor dem SCR-Katalysator vorgenommen werden kann, so dass auf dem Weg bis zum Katalysator gegebenenfalls unter Mitwirkung von im Abgasstrang vorhandenen Mischeinrichtungen eine Durchmischung des Abgases mit dem Reduktionsmittels erfolgen kann. Der Aufwand für die Herstellung und die Montage einer zweiten Injektionseinrichtung an der Abgasanlage ist nun erfindungsgemäß nicht erforderlich. Die Durchmischung des reduktionsmittelfreien Abgasstroms mit dem Reduktionsmittel beinhaltenden Abgasstrom erfolgt in einer dem SCR-Katalysator vorgeschalteten Mischeinrichtung. Eine derartige Mischeinrichtung lässt sich beispielsweise in Form von konstruktiv einfachen und kostengünstig herstellbaren Blechbauteilen verwirklichen, so dass der dafür erforderliche herstellungs- und montagetechnische Aufwand geringer ist als jener für eine zweite Injektionseinrichtung im zweiten Parallelstrang.

Bei einer bevorzugten Ausgestaltung ist vorgesehen, dass die Mischeinrichtung ein an den.SCR-Katalysator angesetztes Gehäuse umfasst, in das der zweite Parallelstrang mit einer Zuströmöffnung mündet, wobei im Gehäuse eine Verteileinrichtung für das über die Zuströmöffnung einströmende Abgas vorhanden ist. Die Verteileinrichtung bewirkt, wie schon ihr Name sagt, eine Verteilung bzw. eine Verwirbelung des Abgasstroms und fördert dadurch dessen Vermischung mit aus dem zweiten Parallelstrang stammenden reduktionsmittelfreien Abgas. Die Verteileinrichtung kann beispielsweise Leitbleche oder dergleichen umfassen, um eine Verwirbelung oder eine Aufteilung des Abgasstroms in eine Vielzahl von unterschiedliche Strömungsrichtungen aufweisenden Teilströmen zu bewirken. Vorzugsweise ist die Verteileinrichtung von einem Hohlkörper gebildet, dessen Wand von einer Vielzahl von Öffnungen durchbrochen ist und dessen Innenraum mit dem ersten Parallelstrang fluidisch verbunden ist. Die Formgebung des Hohlkörpers, etwa dessen Querschnittsform und Außenkontur, ist nahezu beliebig wählbar und kann den jeweiligen Verhältnissen angepasst werden. Die Form der in der Wand des Hohlkörpers vorhandenen Öffnungen ist prinzipiell beliebig. Es kann sich etwa um runde, ovale oder auch schlitzförmige Öffnungen handeln, wobei die jeweilige Form z.B. im Hinblick auf eine bestmögliche Durchmischung der Abgasströme gewählt ist. Das in den Hohlkörper einströmende Abgas wird durch die sehr hohe Anzahl von in dessen Wand vorhandenen Öffnungen in eine Vielzahl von Einzelströmen zerlegt, die den Hohlkörper in unterschiedlichen Richtungen verlassen, so dass schon auf diese Weise eine Durchmischung des ersten Abgasstroms mit dem zweiten Abgasstrom erreicht wird. Die Durchmischung kann noch weiter gesteigert werden, wenn der Hohlkörper direkt vor der Mündungsöffnung des zweiten Parallelstrangs angeordnet ist. Der zweite Abgasstrom muss somit den Hohlkörper umströmen, wodurch ebenfalls eine Verwirbelung und eine Durchmischung von Reduktionsmittel und Abgas erfolgt. Wie bereits erwähnt, lässt sich der Hohlkörper nahezu beliebig formen und damit die Durchmischung des Abgases mit Reduktionsmittel optimieren. Er kann beispielsweise aus strömungstechnischen Gründen in Strömungsrichtung des zweiten Abgasstroms abgeflacht sein, etwa in Querschnitt gesehen tropfenförmig ausgestaltet sein, um seinen Strömungswiderstand zu verringern. Bei einer besonders einfach zu realisierenden und wirkungsvollen Ausgestaltung ist der Hohlkörper als Rohrabschnitt mit einem verschlossenen nicht perforierten Ende ausgebildet. Das in den Rohrabschnitt eintretende Gas verlässt den Rohrabschnitt über dessen perforierte Wand. Der Rohrabschnitt lässt sich ebenfalls im Zuge der Optimierung der Durchmischung von Reduktionsmittel und Abgas unterschiedlich gestalten. So ist es beispielsweise denkbar, dass sich der Rohrabschnitt zu seinem Rohrende hin etwa konisch verjüngt. Mit einer solchen Ausgestaltung kann erreicht werden, dass die Öffnungen über die Länge des Hohlkörpers gesehen gleichmäßig von Abgas durchströmt werden.

Bei einer weiteren bevorzugten Ausgestaltung ist in dem zweiten Parallelstrang der Abgasanlage eine Drosselstelle angeordnet. Mit dieser lässt sich im zweiten Parallelstrang ein Druckverlust einstellen, der dem durch die Verteileinrichtung hervorgerufenen Druckverlust im ersten Parallelstrang entspricht. Auf diese Weise ergeben sich in beiden Strängen gleiche oder zumindest annähernd gleiche Massenströme.

Bei einer anderen bevorzugten Ausgestaltung umfasst die Mischeinrichtung zwar ebenfalls ein dem SCR-Katalysator vorgeschaltetes Gehäuse. Die Parallelstränge münden aber beide derart in das Gehäuse, dass die jeweiligen Abgasströme im Wesentlichen tangential in das Gehäuse eingetragen werden, dass also die Abgasströme eine im Wesentlichen tangential zur Mittellängsachse des SCR-Katalysators verlaufende Strömungsrichtung aufweisen. Durch die tangentiale Anströmung des beispielsweise runden oder ovalen Gehäuses werden die Abgasströme in Umfangsrichtung des Gehäuses in Rotation versetzt und dabei durchmischt. Nicht nur aus Gründen des an der Bodengruppe vorhandenen Einbauraums ist es vorteilhaft, wenn die Parallelstränge an sich etwa diametral gegenüberliegenden Stellen des Gehäuses in dieses münden. Dabei treffen dem Zentrum des Gehäuses naheliegende Bereiche der Abgasströme aufeinander, wodurch es zu einer Verwirbelung und Durchmischung mit dem Reduktionsmittel kommt. Bei einer besonders bevorzugten Variante wird diese Durchmischung noch dadurch verbessert, dass das Gehäuse zwischen dem Mündungsbereich der Parallelstränge und dem SCR-Katalysator eine Verengung aufweist, deren Querschnittsfläche kleiner ist als die mit Abgas beaufschlagte Stirnfläche des SCR-Katalysators. Wenn der vor der Engstelle angeordnete .Wandbereich des Gehäuses konusförmig, also in Form eines Trichters ausgebildet ist, wird die Durchmischung des Abgases mit Reduktionsmittel noch weiter optimiert. Die Abgasströme werden nämlich in dem Trichter aufgrund dessen zum SCR-Katalysator hin abnehmenden Querschnittsfläche beschleunigt und dadurch die Durchmischung verbessert.

Die Erfindung wird nun unter Bezugnahme auf die beigefügten Zeichnungen näher erläutert. Es zeigen:
- Fig. 1: einen Ausschnitt aus einer erfindungsgemäße Abgaslage in schematischer perspektivischer Darstellung,
- Fig. 2: den Ausschnitt A von Fig. 1 einer ersten Ausführungsvariante in teils geschnittener schematischer Ansicht,
- Fig. 3: eine Draufsicht auf den Ausschnitt A von Fig. 1 einer zweiten Ausführungsvariante,
- Fig. 4: einen Querschnitt entsprechend Linie IV-IV in Fig. 3

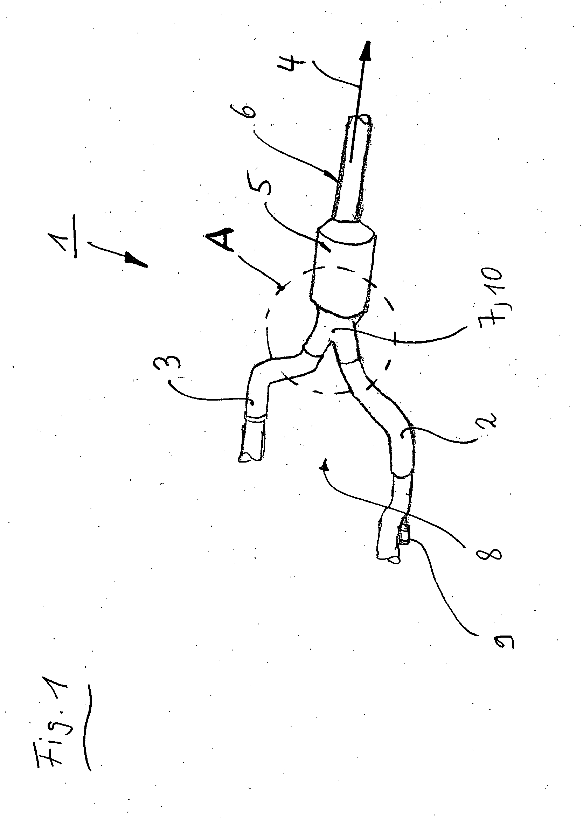

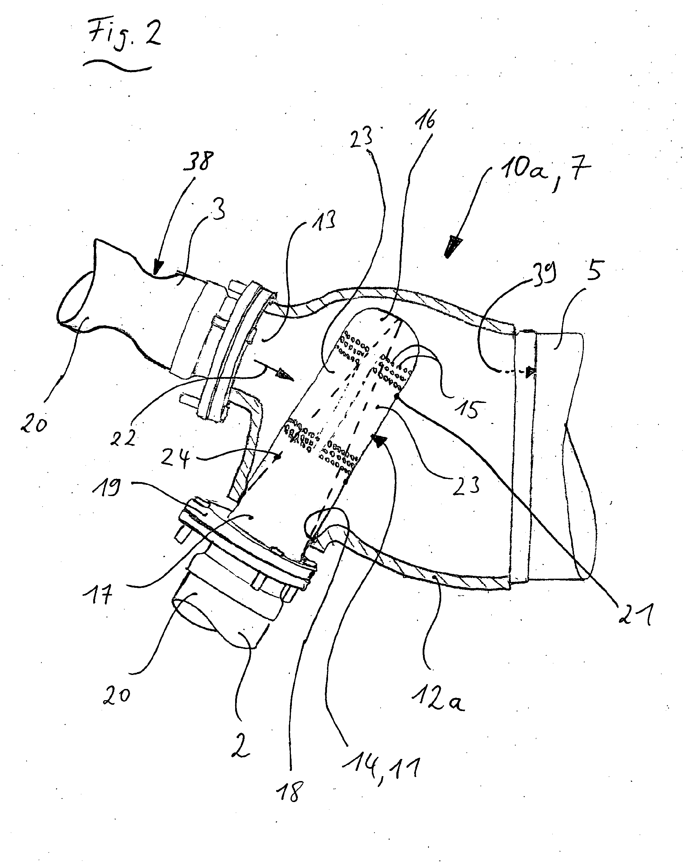

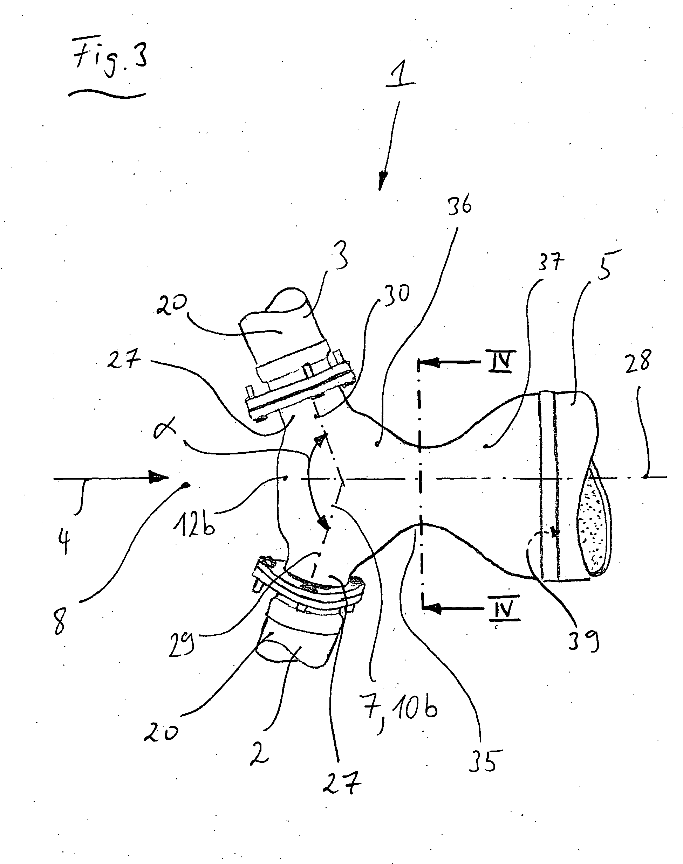

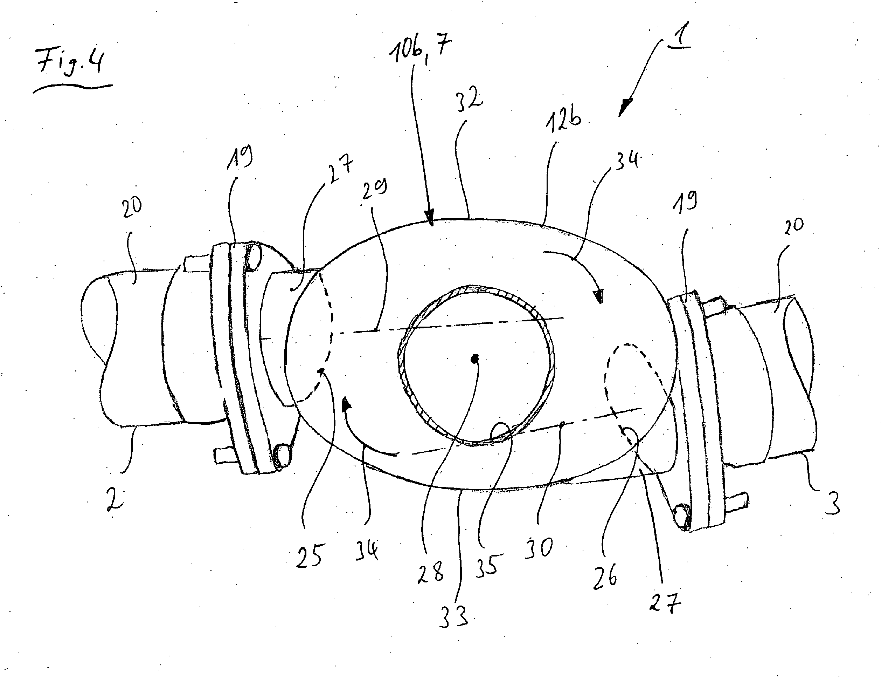

Die in Fig.1 schematisch gezeigte Abgasanlage 1 ist zweiflutig aufgebaut, d.h. sie umfasst einen ersten und einen zweiten Parallelstrang 2, 3 deren gegen die Hauptströmungsrichtung 4 des Abgases weisende Enden vor einem SCR-Katalysator 5 unter Bildung eines einzigen Abgasstranges 6 zusammengeführt sind. Die Verbindungsstelle 7 der beiden Rohrenden befindet sich, beispielsweise aus Platzgründen, etwa weil in dem mit dem Bezugszeichen 8 gekennzeichneten Bereich sich der Getriebeblock des Fahrzeugs (nicht gezeigt) befindet, unmittelbar vor dem SCR-Katalysator 5. An einer stromaufwärts der Verbindungsstelle 7 liegenden Position ist am ersten Parallelstrang 2 eine Injektionseinrichtung 9 vorgesehen, mit der ein Reduktionsmittel (wässrige Harnstofflösung) in das den ersten Parallelstrang 2 durchströmende Abgas dosierbar ist. Der Abstand zur Verbindungsstelle 7 ist so gewählt, dass sich dort das injizierte Reduktionsmittel schon weitgehend mit dem Abgas homogen vermischt hat, wobei gegebenenfalls in dem ersten Parallelstrang 2 Einbauten (nicht gezeigt) vorgesehen sein können, die eine Durchmischung fördern. Am zweiten Parallelstrang 3 findet eine Reduktionsmitteldosierung nicht statt, so dass dementsprechend dort keine Injektionseinrichtung vorhanden ist. Im Bereich der Verbindungsstelle 7 treffen somit ein mit Reduktionsmittel beladener und ein reduktionsmittelfreier Abgasstrom aufeinander. Ohne weitere Maßnahmen zur Durchmischung der Abgasströme würde nur eine Hälfte, nämlich die dem ersten Parallelstrang 2 zugeordnete Hälfte des SCR-Katalysators, arbeiten, d.h. es würde im Wesentlichen nur dort eine Stickstoffreduktion katalysiert werden. Um dies zu vermeiden ist im Bereich der Verbindungsstelle 7 eine Mischvorrichtung 10 vorhanden, die in zwei Ausführungsvarianten in Fig. 2-4 im Detail dargestellt ist. Bei beiden Varianten ist die Verbindungsstelle 7 ein Gehäuse 12a, 12b, welches stirnseitig an den SCR-Katalysator 5 angesetzt ist.

Bei der in Fig.2 gezeigten Ausführungsvariante mündet der zweite Parallelstrang 3 mit einer Zuströmöffnung 13 in das Gehäuse 12a. Innerhalb des Gehäuses 12a ist eine Verteileinrichtung 11, nämlich ein Hohlkörper 14 angeordnet, dessen Innenraum fluidisch mit dem ersten Parallelstrang 2 verbunden ist. Die Wand 21 des Hohlkörpers 14 ist perforiert, weist also eine Vielzahl von Öffnungen 15 auf. Der Hohlkörper 14 ist im Falle der Figur 2 etwa zylinderförmig ausgebildet, wobei sein in das Gehäuse 12a hineinragendes Ende verschlossen ist und keine Perforation aufweist. Das andere Ende 17 des Hohlkörpers 14 ist über eine Gehäuseöffnung 18 nach außen geführt und ist über eine Flanschverbindung 19 mit einem Abgasrohr 20 des Parallelstrangs 2 verbunden. Die Gehäuseöffnung 18 ist so positioniert und der Hohlkörper so ausgerichtet und bemessen, dass er vor der Zuströmöffnung 13 angeordnet ist und sich quer zur Richtung des einströmenden Abgases (Pfeil 22) über diese hinweg erstreckt. Über die Zuströmöffnung 13 etwa in Richtung des Pfeiles 22 einströmendes Abgas trifft somit auf den Hohlkörper 14 auf und muss diesen unter Bildung von Verwirbelungen umströmen. Zumindest in dem umströmten Bereich des Hohlkörpers 14 sind Öffnungen 15 angeordnet. In den Hohlkörper 14 einströmendes, mit Reduktionsmittel beladenes Abgas strömt durch die Öffnungen 15 aus und vermischt sich mit dem reduktionsmittelfreien Abgasstrom des zweiten Parallelstrangs. Die Folge ist, dass das über den Hohlkörper 14 zugeführte Reduktionsmittel über die gesamte Anströmfläche des SCR-Katalysators 5 verteilt wird. Die Anströmfläche ist der freie, von dem Abgasstrom beaufschlagbare Bereich der gegen die Hauptströmungsrichtung weisenden Stirnseite 39 des SCR-Katalysators 5. Zur Optimierung der Vermischung des Abgases mit Reduktionsmittel ist es denkbar, am Hohlkörper 14 Öffnungen 15 mit unterschiedlicher Querschnittsfläche und unterschiedlicher Formgestaltung vorzusehen. Aus Optimierungsgründen kann es zweckmäßig sein, Öffnungen 15 nicht über den gesamten Umfang oder auf der Gesamtfläche des Hohlkörpers 14 zu verteilen, sondern in bestimmten, Arealen 23 anzuordnen. Auch die Formgestaltung des Hohlkörpers 14 selbst ist im Hinblick auf eine optimale Durchmischung des Abgases mit Reduktionsmittel frei wählbar. Denkbar ist beispielsweise, dass der Hohlkörper nicht zylindrisch, sondern konisch ausgestaltet ist, was durch die gestrichelte Linie 24 in Fig.2 angedeutet ist. Der Vorteil einer derartigen Ausgestaltung ist, dass sich in dem sich konisch verjüngenden Hohlkörper 14 der Staudruck bis zu dessen Ende hin kontinuierlich aufbaut, so dass die Öffnungen 15 über die Länge des Hohlkörpers 14 gesehen gleichmäßig von Abgas durchströmt werden.

Die Verteileinrichtung 11 stellt für das im ersten Parallelstrang strömende Abgas einen Strömungswiderstand dar, während ein solcher Widerstand dem Abgasstrom des zweiten Parallelstrang nicht entgegengesetzt wird. Die unterschiedlichen Strömungswiderstände können zu ungleichmäßigen Massenströmen führen. Um gleiche Druck- und Strömungsverhältnisse in beiden Parallelsträngen zu schaffen, ist es zweckmäßig, wenn im zweiten Parallelstrang eine Drosselstelle 38 vorhanden ist. Diese kann durch einen im Abgasrohr 20 vorhandenen Einbau (nicht gezeigt) oder durch eine Einschnürung des Abgasrohrs 20 gebildet sein.

Bei der in Fig.3 und 4 dargestellten Ausführungsvariante umfasst die Mischvorrichtung 10b ein Gehäuse 12b, mit dessen Innenraum die beiden Parallelstränge 2 und 3 jeweils über eine Zuströmöffnung 25, 26 verbunden sind. Die Abgasrohre 20 der Parallelstränge 2,3 sind über Flanschverbindungen 19 mit Anschlussstutzen 27 des Gehäuses 12b verbunden. Die Anschlussstutzen 27 bzw. die Zuströmöffnungen 25,26 befinden sich in Bezug auf die Mittellängsachse 28 des SCR-Katalysators 5 etwa an diametral gegenüberliegenden Positionen des Gehäuses 12b. Außerdem sind die Anschlussstutzen 27 so angeordnet, dass ihre Mittellängsachsen 29, 30 bzw. die sie verlassenden Abgasströme im Wesentlichen tangential in das Gehäuse 12b eingetragen werden. Die Anschlussstutzen 27 sind dabei so angeordnet, dass die Abgasströme in einer quer zur gedachten Verbindungslinie zwischen den Anschlussstutzen verlaufenden Richtung gegeneinander versetzt sind, so dass beispielsweise ein aus dem ersten Parallelstrang 2 austretender, mit Reduktionsmittel beladener Abgasstrom dem einen Fahrzeugboden (nicht dargestellt) zugewandten Wandbereich 32 und ein aus dem Parallelstrang 3 austretender Abgasstrom einem diametral gegenüberliegenden Wandbereich 33 zugeordnet ist. Die Abgasströme bewegen sich somit aufeinander zu und werden durch eine kurvige, etwa ovale oder runde Querschnittsform des Gehäuses 12b in Rotation versetzt, etwa in Richtung der Pfeile 34 in Fig.2. Bei dieser Rotation erfolgt eine Durchmischung der beiden Abgasstränge und dementsprechend eine Verteilung des Reduktionsmittels innerhalb des Gehäuses 12b. Die Mittelachsen 29, 30 der Anschlussstutzen 27 bilden in der Draufsicht gem. Fig. 3 einen gegen die Hauptströmungsrichtung 4 sich öffnenden Winkel α. Ein in das Gehäuse 12b eintretender Abgasstrom weist somit auch eine Komponente in Hauptströmungsrichtung 4 auf.

Der sich an die Anschlussstutzen 27 anschließende und zum SCR-Katalysator 5 führende Gehäusebereich weist eine Engstelle 35 auf. Der in Hauptströmungsrichtung 4 vor der Engstelle 35 angeordnete Wandbereich 36 des Gehäuses 12b verjüngt sich konisch zur Engstelle 35 hin, ist also in Form eines Trichters ausgestaltet. Die Strömungsgeschwindigkeit des im Bereich der Zuströmöffnungen 25,26 in Rotation versetzten Abgases wird aufgrund der Querschnittsverengung des Trichters bis zur Engstelle 35 hin stark erhöht, was eine Gleichverteilung des Reduktionsmittels im Abgasstrom begünstigt. Der sich von der Engstelle 35 weg und zum SCR-Katalysator 5 hin erstreckende Wandbereich 37 ist nach Art eines Diffusors trichterförmig erweitert. Auch diese Ausgestaltung fördert eine gleichmäßige Durchmischung des Abgases mit Reduktionsmittel.

### Bezugszeichenliste

- 1: Abgasanlage
- 2: erster Parallelstrang
- 3: zweiter Parallelstrang
- 4: Hauptströmungsrichtung
- 5: SCR-Katalysator
- 6: Abgasstrang
- 7: Verbindungsstelle
- 8: 8 Bereich
- 9: Injektionseinrichtung
- 10: Mischvorrichtung
- 11: Verteileinrichtung
- 12: Gehäuse
- 13: Zuströmöffnung
- 14: Hohlkörper
- 15: Öffnung
- 16: Ende
- 17: Ende
- 18: Gehäuseöffnung
- 19: Flanschverbindung
- 20: Abgasrohr
- 21: Wand
- 22: Pfeil
- 23: Areal
- 24: gestrichelte Linie
- 25: Zuströmöffnung
- 26: Zuströmöffnung
- 27: Anschlussstutzen
- 28: Mittellängsachse
- 29: Mittelachse
- 30: Mittelachse
- 32: Wandbereich
- 33: Wandbereich
- 34: Pfeil
- 35: Engstelle
- 36: Wandbereich
- 37: Wandbereich
- 38: Drosselstelle
- 39: Stirnfläche

## Patentansprüche

1. Abgasanlage für Dieselfahrzeuge mit einem ersten und einem zweiten, auslassseitig mit einem Motor verbindbaren Parallelstrang (2,3), wobei diese mit ihrem stromabwärts weisenden Enden mit einem SCR-Katalysator (5) verbunden sind, und mit einer Vorrichtung, mit der ein Reduktionsmittel an einer stromaufwärts zum SCR-Katalysator (5) gelegenen Stelle in das Abgas einbringbar ist,
**dadurch gekennzeichnet,**
**dass** nur am ersten Parallelstrang (2) eine Injektionseinrichtung (9) für das Reduktionsmittel vorgesehen ist, und dass dem SCR-Katalysator (5) eine Mischvorrichtung (10) vorgeschaltet ist, in die die Parallelstränge (2,3) münden, und in der eine Vermischung des mit Reduktionsmittel versetzten Abgasstroms des ersten Parallelstrangs (2) mit dem reduktionsmittelfreien Abgasstrom des zweiten Parallelstrangs (3) erfolgt.

2. Abgasanlage nach Anspruch 1,
**dadurch gekennzeichnet,**
**dass** die Mischvorrichtung (10a) ein an den SCR-Katalysator (5) angesetztes Gehäuse (12a) umfasst, in das der zweite Parallelstrang (3) mit einer Zuströmöffnung (13) mündet, wobei im Gehäuse (12a) eine Verteileinrichtung (11) für das über die Zuströmöffnung (13) einströmende Abgas vorhanden ist.

3. Abgasanlage nach Anspruch 2,
**dadurch gekennzeichnet,**
**dass** die Verteileinrichtung (11) ein Hohlkörper (14) ist, dessen Wand (21) von einer Vielzahl von Öffnungen (15) durchsetzter Hohlkörper (14) ist, wobei dessen Innenraum mit dem ersten Parallelstrang (2) verbunden ist.

4. Abgasanlage nach Anspruch 3,
**dadurch gekennzeichnet,**
**dass** der Hohlkörper 14 vor der.Zuströmöffnung (13) des zweiten Parallelstrangs (3) angeordnet ist.

5. Abgasanlage nach Anspruch 3 oder 4,
**dadurch gekennzeichnet,**
**dass** der Hohlkörper (14) ein Rohrabschnitt ist, dessen Wand perforiert ist.

6. Abgasanlage nach Anspruch 5,
**gekennzeichnet durch**
einen Rohrabschnitt mit einem verschlossenen, nicht perforierten Ende.

7. Abgasanlage nach Anspruch 1,
**dadurch gekennzeichnet,**
**dass** die Mischvorrichtung (10b) ein dem SCR-Katalysator (5) vorgeschaltetes Gehäuse (12b) umfasst, in das die Parallelstränge (2,3) derart münden, dass die jeweiligen Abgasströme im Wesentlichen tangential in das Gehäuse eingetragen werden.

8. Abgasanlage nach Anspruch 7,
**dadurch gekennzeichnet,**
**dass** die Parallelstränge (2,3) an sich etwa diametral gegenüberliegenden Stellen in das Gehäuse (12b) münden.

9. Abgasanlage nach Anspruch 7oder 8,
**dadurch gekennzeichnet,**
**dass** das Gehäuse (12b) eine zwischen dem Mündungsbereich der Parallelstränge (2,3) und dem SCR-Katalysator (5) angeordnete Engstelle (35) aufweist, deren Querschnittsfläche kleiner ist als die mit Abgas beaufschlagte Stirnfläche des SCR-Katalysators (5).

10. Abgasanlage nach Anspruch 9,
**dadurch gekennzeichnet,**
**dass** das Gehäuse (12b) einen sich zur Engstelle (35) hin etwa konusförmig verjüngenden Wandabschnitt (36) aufweist.

11. Abgasanlage nach einem der vorhergehenden Ansprüche,
**dadurch gekennzeichnet,**
**dass** in dem zweiten Abgasstrang (3) eine Drosselstelle (38) vorhanden ist.
